# FASCICULE DE BREVET EUROPEEN

(11) **EP 2 683 524 B1**
(45) Date de publication et mention de la délivrance du brevet: **12.12.2018**
(21) Numéro de dépôt: 12707787.3
(22) Date de dépôt: 09.03.2012
(51) Int. Cl.: B23P 15/04, B23K 101/00, B23P 15/00, F01D 9/04

(54) **PROCEDE DE FABRICATION D'UN DIAPHRAGME DE TURBINE A VAPEUR**
VERFAHREN ZUR HERSTELLUNG EINES DAMPFTURBINENDEFLEKTORS
METHOD OF PRODUCING A STEAM TURBINE DEFLECTOR

(30) Priorité: 11.03.2011 FR 1152006
(43) Date de publication de la demande: 15.01.2014
(73) Titulaire: General Electric Technology GmbH, 5400 Baden (CH)
(72) Inventeur: BUGUIN, Arnaud, F-94250 Gentilly (FR); TRAVERS, Dominique, F-93320 Les Pavillon sous Bois (FR)
(74) Mandataire: General Electric Technology GmbH
(86) Numéro de dépôt international: PCT/EP2012/054172
(87) Numéro de publication internationale: WO 2012/123379

(56) Documents cités:
- GB-A- 548 649
- GB-A- 996 773
- JP-A- 5 231 102
- JP-A- 61 265 308
- US-A1- 2007 084 051

## Description

La présente invention a pour objet un procédé de fabrication d'un diaphragme d'une turbine à vapeur.

Une turbine à vapeur est une machine tournante destinée à convertir l'énergie thermique de la vapeur, en énergie mécanique pour entrainer un alternateur, une pompe ou tout autre récepteur mécanique rotatif. La turbine comporte dans la plupart des cas, un module de haute pression, éventuellement un module de moyenne pression, et un module de basse pression. De la vapeur fournie par un générateur de vapeur est acheminée vers le module de haute pression, puis vers les modules de moyenne et basse pression.

Généralement, les modules moyenne et basse pression comprennent un corps interne simple ou double flux, symétriques ou non, renfermant un rotor équipé d'un ailetage mobile et supportant des aubages fixes. Les aubages fixes sont constitués par une succession de diaphragmes suspendus dans ledit corps interne, et s'intercalant entre les étages mobiles du rotor, lesdits diaphragmes étant prévus pour guider, selon une direction bien spécifique, le flux vapeur vers les ailettes mobiles du rotor, en accélérant la vapeur. Typiquement, un diaphragme comporte une couronne interne, et une couronne externe reliées entre elles par une multiplicité d'aubes identiques.

Selon certains procédés de fabrication de l'état de la technique, chacune des aubes est soudée manuellement, à la fois à la couronne interne et à la couronne externe. Pour réaliser ces soudures dans les meilleures conditions, les deux extrémités de chaque aube, amenées à être soudées aux couronnes interne et externe du diaphragme, sont chanfreinées par un opérateur, de manière à ménager un espace de remplissage destiné à loger un cordon de soudure. Cet espace, qui est assimilable à une gorge périphérique pratiquée autour de l'aube, est délimité partiellement par l'aube et par la couronne correspondante, et autorise donc le dépôt d'une plus grande quantité de matériau de soudage, de manière à renforcer la liaison entre ladite aube et ladite couronne.

Or, ces chanfreins sont, jusqu'à présent, réalisés manuellement par un opérateur au moyen d'une meule, la qualité desdits chanfreins étant donc fortement dépendante des caractéristiques de cet opérateur, tant au niveau de ses compétences que de ses aptitudes du moment à réaliser ce meulage. Il en découle une qualité assez fluctuante de ces chanfreins, pouvant être dommageable pour les diaphragmes élaborés à partir de telles aubes. En effet, l'expérience a montré, qu'un meulage manuel de tels chanfreins, demeurait assez approximatif sur une grande quantité d'aubes traitées par ce procédé manuel, et pouvait révéler des défauts de structure importants et nuisibles, tels que, par exemple, des fissures le long des joints soudés. Afin de remédier à cette situation jugée inacceptable pour le bon fonctionnement de la turbine, les risques de dysfonctionnement ou d'accidents s'avérant trop élevés, la phase d'usinage des extrémités de chaque aube a été automatisée, au moyen d'une machine conçue pour réaliser des gorges de forme et de taille données, les unes à la suite des autres, de façon répétitive, fiable et constante. De cette manière, les procédés de fabrication selon l'invention, contribuent à fortement diminuer, voire à annuler, tout risque d'apparition de défauts sur le diaphragme, liée à un usinage aléatoire des aubes, et donc à des liaisons par soudure de dimension et/ou de qualité moindre.

JP61-265308 décrit un procédé de soudage pour les diaphragmes de turbines.

La présente invention a pour objet un procédé de fabrication d'un diaphragme de module basse ou moyenne pression d'une turbine à vapeur, ledit diaphragme comportant une couronne interne et une couronne externe, ainsi que des aubes, ledit procédé comprenant une étape de soudure desdites aubes sur lesdites couronnes. La principale caractéristique d'un procédé de fabrication selon l'invention, est que l'étape de soudure est précédée d'une étape d'usinage automatique des extrémités de chaque aube, afin de réaliser un évidement périphérique, autour de chacune desdites extrémités. De cette manière, l'automatisation de l'usinage des aubes va permettre de produire des aubes uniformes entre elles, et pourvues d'évidements de taille et de géométrie constantes, contrairement à un meulage manuel, qui va forcément être aléatoire, puisqu'il est directement corrélé aux compétences et à l'état de forme d'un opérateur. Chaque aube est ainsi usinée automatiquement au niveau de ces deux extrémités, pour être fixée par soudage, à la fois à la couronne interne et à la couronne externe.

Préférentiellement, l'étape d'usinage est effectuée au moyen d'une machine conçue pour réaliser des évidements par enlèvement de matière. De cette manière, avant de subir cet usinage, les aubes arrivent dans une géométrie simple et homogène, et sont ensuite progressivement creusées, pour la réalisation d'évidements de taille et de forme données. Il peut ainsi être envisagé de programmer les paramètres de fonctionnement de la machine pour obtenir, avec maîtrise et précision, les dimensions et les formes d'évidements voulues.

Avantageusement, la machine est une fraiseuse. Ce type de machine, qui est particulièrement adapté à un usinage de pièce par enlèvement de matière, peut être programmé pour assurer un usinage spécifique d'évidement, caractérisé par une profondeur d'enlèvement de matière et une section donnée.

De façon préférentielle, l'évidement périphérique est assimilable à une gorge réduisant la section de l'aube. En effet, l'usinage des extrémités de chaque aube est destiné à créer une rigole périphérique avec la couronne correspondante, une fois que l'aube a été correctement positionnée sur le diaphragme, de manière à y loger un cordon de soudure. Selon un mode de réalisation préféré d'un procédé selon l'invention, chaque évidement est réalisé au niveau de la partie distale de chaque extrémité de l'aube. Chaque gorge ainsi créée et destinée à recevoir un cordon de soudure, est partiellement délimitée par l'aube et la couronne.

Préférentiellement, chaque aube présente un bord d'attaque et un bord de fuite, l'évidement faisant le tour de l'aube en excluant le bord de fuite. En effet, la section d'une aube peut être assimilée à une goutte d'eau, présentant une zone large et arrondie, matérialisant le bord d'attaque, et une zone effilée de faible épaisseur, représentant le bord de fuite. Le bord de fuite étant donc très fin, il n'est pas recommandé de l'usiner pour réduire encore plus son épaisseur, sous peine de le transpercer et de le rendre inutilisable.

L'évidement périphérique est de section constante, autour de l'aube. Cette configuration présente le double avantage de simplifier l'usinage, en figeant dès le départ de l'opération et de façon constante dans le temps, les paramètres de fonctionnement de la machine d'usinage, et également de permettre un dépôt homogène du cordon de soudage, sans avoir à modifier les caractéristiques dimensionnelles dudit cordon déposé, pour les adapter à un évidement de section profilée. La réalisation d'une section constante de l'évidement, est atteinte beaucoup plus facilement et plus rapidement par le biais d'une machine automatique préprogrammée, que par un meulage manuel.

La section de l'évidement présente une première dimension, qui est fonction du niveau de sollicitation prévu sur le diaphragme en configuration opérationnelle dans la turbine, et une deuxième dimension qui est fonction de l'accessibilité audit évidement, par un opérateur réalisant la phase de soudage. En effet, l'évidement présente une première dimension, qui correspond à la profondeur d'usinage dans l'aube, et qui s'étend dans une direction, suivant laquelle la section de ladite aube a tendance à diminuer, et une deuxième dimension, qui s'étend suivant une direction parallèle à un axe de l'aube reliant ses deux extrémités, et pouvant être assimilée à sa hauteur. De cette manière, l'évidement sera usiné en profondeur, pour tenir compte de la quantité de cordon de soudure à déposer, cette quantité étant fonction du niveau de sollicitation prévisionnel auquel sera soumis le diaphragme en situation opérationnelle. Ainsi, plus cette sollicitation est supposée être importante, plus la profondeur de l'évidement à usiner sera élevée, pour y déposer une grande quantité de cordon de soudage. De même, il sera usiné à une hauteur minimum, juste suffisante pour qu'un opérateur puisse facilement déposer le cordon de soudage dans l'évidement, en tenant compte de la présence de l'aube contigüe, déjà soudée aux deux couronnes. Il faut en effet rappeler, que deux aubes consécutives peuvent se chevaucher, en laissant filtrer, entre elles, un espace de faible épaisseur, rendant délicate le dépôt d'un cordon de soudage dans la totalité de la gorge d'une aube, une fois que l'aube voisine a déjà été implantée. La détermination de la hauteur minimale de l'évidement formant gorge, va donc être effectuée pour permettre une bonne accessibilité à ladite gorge, par un opérateur désirant y déposer un cordon de soudage.

Le rapport de la première dimension sur la deuxième dimension est compris entre 0.5 et 2. De cette manière, ce rapport tient compte à la fois du niveau de sollicitation auquel sera soumis le diaphragme dans le corps interne, et du niveau d'accessibilité à l'évidement par un opérateur amener à déposer un cordon de soudage.

Les procédés de fabrication d'un diaphragme selon l'invention, présentent l'avantage de faire gagner un temps significatif au niveau de la phase d'usinage des aubes, en réalisant cette opération automatiquement, alors que les procédés déjà existants, impliquent un usinage manuel de ces aubes, par un opérateur. Ils ont de plus, l'avantage d'être fiables, reproductibles et précis, qui sont des qualités particulièrement recherchées, lorsque l'opération d'usinage doit se répéter sur un grand nombre de pièces.

On donne, ci-après, la description détaillée d'un mode de réalisation préféré d'un procédé de fabrication d'un diaphragme selon l'invention, en se référant aux figures 1 à 3b.
- La figure 1 est une vue en perspective d'un diaphragme d'un corps interne d'un module moyenne ou basse pression d'une turbine à gaz,
- La figure 2, est une vue agrandie en perspective d'une aube fixée par soudage sur un diaphragme,
- La figure 3a est une vue en perspective d'une aube selon l'invention,
- La figure 3b est une vue en perspective de l'aube de la figure 3a, mais sous un autre angle.

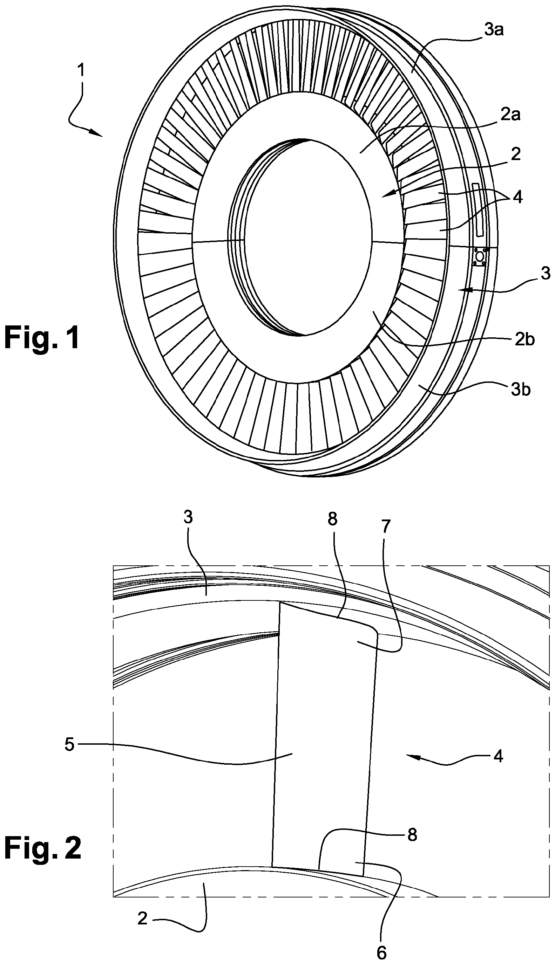

En se référant à la figure 1, un diaphragme 1 de corps interne d'un module de basse ou de moyenne pression d'une turbine à gaz, est généralement composé d'une couronne interne 2 et d'une couronne externe 3 annulaires, lesdites couronnes étant concentriques. Chaque couronne présente une première partie 2a,3a qui est fixée à une deuxième partie 2b,3b par boulonnage, lesdites premières et lesdites deuxièmes parties étant identiques. L'espace situé entre les deux couronnes 2,3 est occupé par une pluralité d'aubes identiques 4, deux aubes 4 contiguës se chevauchant, en laissant subsister entre elles, un passage oblique par rapport au plan général de surface du diaphragme. Ces passages ménagés entre deux aubes 4 successives, ont pour but d'orienter de façon optimisée, les flux gazeux vers les ailes mobiles du rotor, en les accélérant.

En se référant à la figure 2, une aube 4 se présente sous la forme d'un corps allongé 5, permettant de distinguer une première extrémité 6 mise au contact de la couronne interne 2 et une deuxième extrémité 7 mise au contact de la couronne externe3, la liaison de ces extrémités 6,7 avec leur couronne 2,3 respective, étant assurée par soudage, au moyen d'un cordon 8 déposé autour desdites extrémités 6,7 et contre chacune desdites couronnes 2,3. De cette manière, chaque aube 4 constituant le diaphragme 1 se retrouve soudée à la fois sur la couronne interne 2 et sur la couronne externe 3.

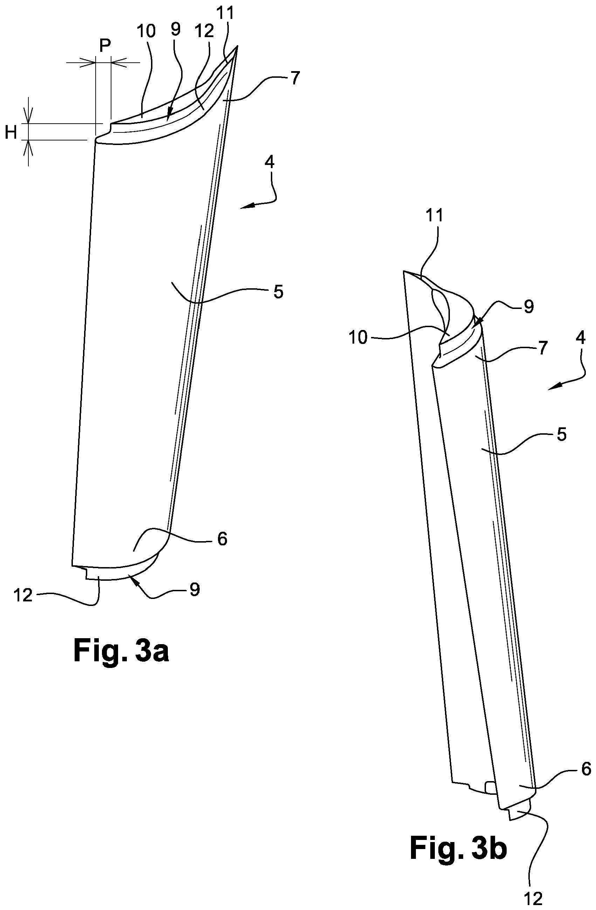

En se référant aux figures 3a et 3b, chaque aube 4 est usinée au niveau de chacune de ses deux extrémités 6,7, de manière à créer avec la couronne 2,3 contre laquelle elle est au contact, une gorge 9 qui est destinée à servir de logement pour un cordon 8 de soudure. Chaque aube 4 possède une section sensiblement en forme de goutte d'eau, présentant une forme arrondie et élargie correspondant au bord d'attaque 10, et une partie effilée de faible épaisseur correspondant au bord de fuite 11. L'usinage est réalisé au niveau de la partie distale de chaque extrémité 6,7 de l'aube 4, et a pour objet de créer un évidement périphérique 12 autour de toute la section de ladite aube 4, excepté au niveau du bord de fuite 11, dont la faible épaisseur interdit tout amincissement supplémentaire par usinage, sous peine de perforer ledit bord 11 et de rendre l'aube 4 inopérante. L'évidement 12, qui est identique à chaque extrémité d'une aube 4, est réalisé par enlèvement de matière sur ladite aube 4 au moyen d'une fraiseuse. Chaque évidement 12 se caractérise par une première dimension P, qui est assimilable à la profondeur d'enlèvement de matière dans l'aube 4, et qui s'étend dans une direction, suivant laquelle la section de ladite aube 4 a tendance à diminuer, et une deuxième dimension H, qui s'étend suivant une direction parallèle à un axe de l'aube 4, en l'occurrence un axe longitudinal, reliant les deux extrémités 6,7 au niveau desquelles sont pratiqués les évidements 12, et pouvant être assimilée à sa hauteur. La profondeur P d'usinage de l'évidement 12 va permettre de déterminer la quantité maximale de cordon 8 de soudage, qui va pouvoir être insérée dans la gorge 9 située autour de l'aube 4, et sera dimensionnée en fonction du niveau de sollicitation prévisionnelle qui sera exercée sur le diaphragme 1 en situation opérationnelle dans le corps interne. Plus cette sollicitation sera évaluée comme importante, plus il sera recommandé d'insérer une grande quantité de cordon de soudage 8 dans la gorge 19, afin de renforcer l'arrimage des aubes 4 sur les couronnes 6,7. La hauteur H de l'évidement sera dictée par l'accessibilité d'un opérateur à une gorge 19 pour y déposer un cordon de soudage 8, une fois que l'aube 4 contiguë aura déjà été soudée au diaphragme 1. En effet, deux aubes successives 4 sont placées très proches l'une de l'autre, à tel point qu'elles peuvent se chevaucher en ne laissant subsister qu'un interstice de faible épaisseur entre elles. Il ne faut donc pas qu'une aube 4 déjà fixée au diaphragme 1 empêche le dépôt, dans de bonnes conditions, du cordon de soudure 8 dans la gorge 9 de l'aube 4 voisine, restant à souder. Cette hauteur H va donc être déterminée en fonction de la taille et de la géométrie des aubes 4 à fixer sur le diaphragme 1, ainsi que de leur espacement prévu.

Les procédés de fabrication selon l'invention, d'un diaphragme 1 de corps interne d'un module basse ou moyenne pression d'une turbine à gaz, suivent les étapes suivantes :
- En fonction du niveau de sollicitation prévisionnelle qui va s'exercer sur le diaphragme 1 en situation opérationnelle, et en fonction de la taille et de la forme des aubes 4 à souder sur le diaphragme 1, ainsi que de leur espacement prévu, un évidement 12 de hauteur H et de profondeur P données, est réalisé par usinage automatique, aux deux extrémités 6,7 de chaque aube 4,
- Une première aube est prépositionnée sur le diaphragme 1, entre les deux couronnes 2,3 à un emplacement bien identifié, au moyen de quelques points de soudures placés au niveau des extrémités 6,7 de l'aube 4,
- Un cordon de soudage 8 est alors placé dans l'une des deux gorges 9 pour souder l'extrémité 6,7 considérée à la couronne 2,3 correspondante,
- Un autre cordon de soudage 8 est alors placé dans l'autre gorge 9 pour souder l'autre extrémité 6,7 à l'autre couronne 2,3,
- Une fois que la première aube 4 a été soudée au diaphragme 1, l'opération se répète avec une deuxième aube 4, placée immédiatement à coté de la première aube 4, puis de proche en proche avec toutes les autres aubes 4 restant à fixer.

## Revendications

1. Procédé de fabrication d'un diaphragme (1) de module basse ou moyenne pression d'une turbine à vapeur, ledit diaphragme (1) comportant une couronne interne (2) et une couronne externe (3), ainsi que des aubes (4), ledit procédé comprenant une étape de soudure desdites aubes (4) sur lesdites couronnes (2,3), l'étape de soudure étant précédée d'une étape d'usinage automatique des extrémités (6,7) de chaque aube (4), afin de réaliser un évidement (12) périphérique autour de chacune desdites extrémités (6,7), où l'évidement (12) périphérique est de section constante autour de l'aube (4), **caractérisé en ce que** la section de l'évidement (12) présente une première dimension P, qui est fonction du niveau de sollicitation prévu sur le diaphragme (1) en configuration opérationnelle dans la turbine, et une deuxième dimension H qui est fonction de l'accessibilité audit évidement (12), par un opérateur réalisant la phase de soudage, et **en ce que** le rapport de la première dimension P sur la deuxième dimension H est compris entre 0.5 et 2.

2. Procédé selon la revendication 1, **caractérisé en ce que** l'étape d'usinage est effectuée au moyen d'une machine conçue pour réaliser des évidements (12) par enlèvement de matière.

3. Procédé selon la revendication 2, **caractérisé en ce que** la machine est une fraiseuse.

4. Procédé selon l'une quelconque des revendications 1 à 3, **caractérisé en ce que** l'évidement (12) périphérique est assimilable à une gorge (9), réduisant la section de l'aube (4).

5. Procédé selon l'une quelconque des revendications 1 à 4, **caractérisé en ce que** chaque aube (4) présente un bord d'attaque (10) et un bord de fuite (11), et **en ce que** l'évidement (12) fait le tour de l'aube (4) en excluant le bord de fuite (11).

## Patentansprüche

1. Verfahren zur Herstellung eines Deflektors (1) für ein Nieder- oder Mitteldruckmodul einer Dampfturbine, wobei der Deflektor (1) einen Innenkranz (2) und einen Außenkranz (3) sowie Schaufeln (4) enthält, wobei das Verfahren einen Schritt des Schweißens der Schaufeln (4) an die Kränze (2, 3) umfasst, wobei dem Schritt des Schweißens ein Schritt des automatischen Zerspanens der Enden (6, 7) jeder Schaufel (4) vorangeht, um eine Umfangsausnehmung (12) um jedes der Enden (6, 7) herum auszuführen, wobei die Umfangsausnehmung (12) um die Schaufel (4) herum von konstantem Querschnitt ist, **dadurch gekennzeichnet, dass** der Querschnitt der Ausnehmung (12) eine erste Abmessung P aufweist, die vom Beanspruchungsgrad abhängig ist, welcher in Betriebskonfiguration in der Turbine am Deflektor (1) vorgesehen ist, und eine zweite Abmessung H, die von der Zugänglichkeit zu der Ausnehmung (12) durch einen Arbeiter abhängig ist, welcher die Schweißphase ausführt, und dadurch, dass das Verhältnis der ersten Abmessung P zur zweiten Abmessung H im Bereich zwischen 0,5 und 2 beträgt.

2. Verfahren nach Anspruch 1, **dadurch gekennzeichnet, dass** der Schritt des Zerspanens mittels einer Maschine erfolgt, die dafür konzipiert ist, Ausnehmungen (12) durch Abtragen von Material auszuführen.

3. Verfahren nach Anspruch 2, **dadurch gekennzeichnet, dass** die Maschine eine Fräse ist.

4. Verfahren nach einem der Ansprüche 1 bis 3, **dadurch gekennzeichnet, dass** die Umfangsausnehmung (12) mit einer Kehle (9) gleichzusetzen ist, die den Querschnitt der Schaufel (4) reduziert.

5. Verfahren nach einem der Ansprüche 1 bis 4, **dadurch gekennzeichnet, dass** jede Schaufel (4) eine Vorderkante (10) und eine Hinterkante (11) aufweist, und dadurch, dass die Ausnehmung (12) unter Auslassen der Hinterkante (11) um die Schaufel (4) herumläuft.

## Claims

1. Process for manufacturing a diaphragm (1) of a low- or medium-pressure module of a steam turbine, said diaphragm (1) comprising an inner gear (2) and an outer gear (3), as well as blades (4), said process comprising a step whereby said blades (4) are welded onto said gears (2, 3), the welding step being preceded by as step whereby the ends (6, 7) of each blade (4) are automatically machined to create a peripheral cavity (12) surrounding each said end (6, 7), where the peripheral cavity (12) features a constant cross-section around the blade (4), **characterised in that** the cross-section of the cavity (12) features a first dimension P, which depends on the stresses considered on the diaphragm (1) in an operational configuration inside the turbine, and a second dimension H depending on the accessibility to said cavity (12) by an operator performing the welding phase, and **in that** the ratio of the first dimension P to the second dimension H is between 0.5 and 2.

2. Process according to claim 1, **characterised in that** the machining step is achieved by means of a machine designed to create cavities (12) by removing matter.

3. Process according to claim 2, **characterised in that** the machine is a milling machine.

4. Process according to any one of the claims 1 to 3, **characterised in that** the peripheral cavity (12) is similar to a groove (9) that reduces the cross-section of the blade (4).

5. Process according to any one of the claims 1 to 4, **characterised in that** each blade (4) features a leading edge (10) and a trailing edge (11), and **in that** the cavity (12) surrounds the blade (4), with the exclusion of the trailing edge (11).
